Europäisches Patentamt

European Patent Office

Office européen des brevets

(11) Publication number : **0 644 234 A1**

## (12) EUROPEAN PATENT APPLICATION

(21) Application number : **94306289.3**

(22) Date of filing : **25.08.94**

(51) Int. Cl.⁶ : **C08K 9/10, B41M 5/165, B41M 5/28**

(30) Priority : **17.09.93 JP 254886/93**

(43) Date of publication of application :
**22.03.95 Bulletin 95/12**

(84) Designated Contracting States :
**DE ES FR GB IT NL**

(71) Applicant : **GE PLASTICS JAPAN LIMITED**
**7-2, 3-Chome,**
**Nihonbashi-Honcho**
**Chuo-Ku, Tokyo (JP)**

(72) Inventor : **Kato, Hideki**
**7-400 Meson do Belle,**
**336-2 Hiramatsuhoncho**
**Utsunom City, Tochigi Prefecture (JP)**

(74) Representative : **Pratt, Richard Wilson et al**
**London Patent Operation**
**G.E. Technical Services Co. Inc.**
**Essex House**
**12/13 Essex Street**
**London WC2R 3AA (GB)**

(54) **Resin composition for laser marking.**

(57)    A thermoplastic resin composition, in which B) 0.1-30 parts by weight of microcapsules composed of an enveloping layer made up of a composition that undergoes thermosensitive decomposition at a temperature of 200-1,000°C and a core component with heat resistance higher than that of said composition of the enveloping layer is added with A) 100 parts by weight of thermoplastic resin. The surface of a molded product of the thermoplastic resin composition can be subjected to vivid and durable laser marking simply and in a short period of time.

EP 0 644 234 A1

## Industrial application field

The present invention concerns a resin composition for use in laser marking.

Examples of methods for marking thermoplastic resins include spraying ink by an ink jet system, screen printing and ink inscription systems. Generally, these methods have problems of thermal shock resistance (peeling of the ink surface), weathering resistance (discoloration of the ink) and abrasion resistance (abrasion of the ink surface).

The ink jet system and screen printing involve applying and drying ink upon the resin surface to bond it there. However, in these methods, the ink and the resin are made of different materials, making it difficult to achieve a complete bond, and this point must be taken into consideration when choosing the ink.

In ink-embedding systems, hollows are formed during molding beforehand at the locations on the resin to be marked, or it is engraved after it is molded, after which it is marked by embedding ink or paint in those locations.

However, in the method where hollows are formed during molding, the marking configuration is limited by the product shape, and therefore difficulties are entailed by changing the marking configuration with each different product. In the method where engraving is performed, long periods of time are expended in the marking. In addition, because it is subsequently necessary to remove the excess ink or paint left by the embedding, the process becomes complex, making these methods unsuitable as mass production marking techniques.

For the above reasons, the laser marking method, which features no contact, a high marking speed and ease of automation and process control, has recently come into frequent use on an industrial basis. Existing laser marking methods entail using laser light to form marks, bar codes, images, etc., on the surface of metals, ceramics, organic polymer materials, etc.

Existing laser marking methods include irradiating the subject surface with laser light and

1) marking the irradiated area by etching it to alter the condition of the surface (roughening or hollowing);

2) marking by utilizing decoloration or discoloration of the pigment or dye, etc., in the irradiated area, as recorded in Japanese Kokai Patent Application Nos. Sho 56[1981]-144995, Sho 60[1985]-155493, Sho 60[1985]-166488, Sho 60[1985]-172590, Sho 60[1985]-47065, Sho 62[1987]-50360 and Hei 3[1991]-10884; and

3) marking by utilizing changes in the condition of the surface (protuberances) due to foaming of the base resin, as recorded in Japanese Kokoku Patent No. Hei 2[1990]-47314.

In the aforementioned marking methods (3) utilizing conditional changes, a nonpolymerizing monomer or a decomposition product or the like contained within the resin in an area subjected to considerable heating by laser light is volatilized, causing the heated location to foam. Accordingly, marking is then brought about due to irregular reflection of the light or bulging of the resin.

However, in the marking due to roughening or hollowing of the surface carried out in method (1), the boundaries between the areas irradiated with laser light and those not irradiated are unclear. Methods have been adopted for forming different resins into a lamellar structure and then cutting away only the resin in the surface layer, but these methods have the drawbacks that the manufacturing process is complex, and it is difficult to etch the structure to a specified layer only.

The marking due to decoloration or discoloration of pigments or dyes, etc., carried out in method (2) has the drawback that the variety and color of the resin is limited by the type of pigment or dye, etc. Moreover, because the pigment or the dye, etc., is readily decolored or colored by heat, the region of discoloration spreads, leaving the outlines of characters and the like unclear.

In the marking that utilizes a conditional change due to foaming carried out in method (3), it is necessary to investigate the optimal conditions for the respective resins. Moreover, using a resin alone may seem simple; however, when, for example, the surface of a resin composition composed of multiple components is marked, the optimal conditions for each of the components must be investigated one by one. Moreover, because foaming is difficult to bring about depending on the resin, there are limits on the resins used.

## Problems the invention is intended to solve

The objective of the present invention is to provide a resin composition that can be marked simply in a short period of time with desired colors that are vivid and durable.

## Means to solve the problems

The present invention is based on the discovery that, when a specified compound is contained in a thermoplastic resin, a resin composition is obtained that enables vivid marking to be carried out with an extremely simple operation.

Specifically, the aforementioned problems are solved by a resin composition for use in laser marking, in which B) 0.1-30 parts by weight of microcapsules composed of an enveloping layer made up of a composition that undergoes thermosensitive decomposition at a temperature of 200-1000°C and a core component with heat resistance different from that of said composition forming the enveloping layer is added with A) 100 parts by weight of thermoplastic resin.

In the present invention, when the microcapsules are added in an amount of less than 0.1 parts by weight, they are not dispersed in the surface of the molded resin product. Moreover, when the amount exceeds 30 parts by weight, the physical properties are reduced. It is possible to produce a composition in which the enveloping layer and the core component constituting the aforementioned microcapsules have different colors.

There are no special restrictions on the thermoplastic resin that is employed in the present invention: various known thermoplastic resins can be used. Examples include polyesters, such as polyethylene terephthalate (PET), polybutylene terephthalate (PBT), polycyclohexane terephthalate (PCT), polyphenylene oxide (PPO), polycarbonate (PC), and polyether imide (PEI).

Additional examples include but are not limited to polystyrene (PS), such as high-impact polystyrene (HIPS), polyethylene (PE), polypropylene (PP), polyamide (PA), polyvinyl chloride resin (PVC), polyacetal (POM) [sic], fluororesins such as polytetrafluoroethylene, acrylic resins, polysulfones, polyphenylene sulfide (PPS) and methylpentene resins.

Mixtures of various thermoplastic resins, such as mixtures of PPO and PS resins, can also be used. Preferable are polyesters, PPO, PC, PEI or resin mixtures containing these.

The resin composition for use in laser marking of the present invention can contain any desired known material. For example, it can contain rubber components such as styrenebutadiene copolymer (SB), styrene-acrylonitrile copolymer (SAN), styrene-butadiene-styrene copolymer (SBS), styrene-ethylenebutadiene-styrene copolymer (SEBS), ethylene-propylene copolymer (EP), ethylene-propylene-diene copolymer (EPDM) and acrylonitrile-butadiene-styrene copolymer (ABS).

The resin composition for use in laser marking of the present invention can also contain various flame retardants and flame-retardant adjuvants. There are no special restrictions on the flame retardants and flame-retardant adjuvants: preferable examples include, but are not limited to, halide flame retardants such as brominated imides, brominated polycarbonates, brominated epoxy compounds, brominated bisphenol A (Br-BPA) and brominated polyphenylene oxide, phosphorus flame retardants such as triphenyl phosphate (TPP), and flame-retardant adjuvants such as $Sb_2O_3$.

Although the amounts of these flame retardants and flame-retardant adjuvants used are freely determined in correspondence with the type of the thermoplastic resin and the targeted resin composition, it is generally preferable that the amount of flame retardant be 5-30 parts by weight, and the amount of the flame-retardant adjuvant be 0-15 parts by weight, with 100 parts by weight of thermoplastic resin.

The resin composition for use in laser marking of the present invention can also contain reinforcers such as glass fibers, carbon fibers and aramid fibers. Although the amounts of these materials used are generally freely determined in correspondence with the type of the thermoplastic resin and the targeted resin composition, it is generally preferable to employ an amount of approximately 0-100 parts by weight, and particularly approximately 0-50 parts by weight, with 100 parts by weight of thermoplastic resin.

The resin composition of the present invention can also contain one or more customarily used additive in ranges that do not compromise the objectives of the present invention, e.g., organic or inorganic fillers such as glass, silica, and talc, plasticizers, lubricants, thermal stabilizers, weathering resistors, antistatic agents, slipping agents, antiblocking agents, defogging agents, pigments, dyes, natural oils, synthetic oils and waxes.

As a result of mixing in the aforementioned various components, it is possible to obtain the resin composition for use in laser marking of the present invention. There are no special limitations on the mixing method, and it is also possible to compound the various components in an arbitrary sequence. For example, the microcapsules and the other desired components can be added and mixed into the thermoplastic resin while it is molten, and the microcapsules and the other desired components can also be added and kneaded into a solution of the thermoplastic resin.

In more detail, examples of these processes include methods in which microcapsules and the desired components are directly added and kneaded either separately or simultaneously into a molten thermoplastic resin; methods in which pellets of a thermoplastic resin are supplied to a one-screw or two-screw extruder or the like together with the microcapsules and other desired components, and the resulting system is melted and kneaded; and methods in which a thermoplastic resin is dissolved in a suitable solvent (such as methylene chloride, chloroform, toluene or tetrahydrofuran), the microcapsules and desired components are separately or simultaneously added to this solution, and the resulting system is agitated.

To cite an example of a preferred embodiment of the aforementioned melt-kneading method, the resin composition of the present invention can be obtained in the form of pellets, etc., by employing a one-screw or two-screw extruder with diameter of 30-90 mm is employed to carry out extrusion at a temperature corresponding to the thermoplastic resin used (temperatures can be set to, but are not limited to, approximately 260°C for a PBT resin, approximately 280°C for a PCT resin, approximately 280°C for a mixture of a PPO resin and a PS resin, approximately 270°C for a PC resin, and approximately 330°C for a PEI resin).

Moreover, there is no special limitation on the method for creating molded products from the resin composition of the present invention: it is possible to employ various known methods such as injection molding, extrusion molding, blow molding and vacuum molding.

There is no special restriction on the molding conditions; molding can be carried out under conditions such as arbitrary pressures and temperatures (for example, the temperature can be set to, but is not limited to, approximately 260°C for injection molding a PBT resin, approximately 280°C for injection molding a PCT resin, approximately 260°C for injection molding a mixture of a PPO resin and a PS resin, approximately 270°C for injection molding a PC resin, and approximately 320°C for injection molding a PEI resin) that correspond to items such as the components used, the targeted molded product and the molding method. Persons skilled in the art will be easily able to select suitable kneading methods and molding methods corresponding to items such as the component used and the targeted product.

The resin composition of the present invention can be easily marked by an arbitrary method. Examples of methods that can be used include, but are not limited to, $CO_2$ lasers and YAG lasers.

The resin composition of the present invention can be marked vividly by irradiation with laser light. The marking performed on the resin composition of the present invention differs from marking in which dyes or pigments are decolored or discolored in that the areas other than those irradiated are unaffected by the laser light. As a result, a fine line with a width on the order of, e.g., 10 μm can be drawn. Moreover, the marking can be carried out quickly: in the case of a line with a width on the order of 1.0 mm, for example, drawing can be carried out at a speed of 200 mm/sec or above.

Although the present invention includes resin compositions with various compositions, there is no need to investigate the optimal irradiation conditions one by one for each of the resin compositions, and the resin employed is not restricted in terms of components. The resin composition of the present invention also has the advantage that it enables simplification of the manufacturing process.

When the surface of a molded product obtained from the resin composition of the present invention is irradiated with laser light, the enveloping layer in the added microcapsules undergoes thermosensitive decomposition. Due to this thermosensitive decomposition of the enveloping layer, the core component is exposed, bringing about marking in the color of the composition forming the core component.

The temperature at which the composition forming the enveloping layer undergoes thermosensitive decomposition is higher than the temperature obtained in operations such as the extrusion and molding of the suitable thermoplastic resin, and is selected so that the enveloping layer first experiences thermosensitive decomposition as a result of the irradiation with laser light.

The color of the composition forming the core component can be an arbitrary color such as white, black, red, blue or yellow, and can be different from the color of the enveloping layer. However, in consideration of the heat transfer efficiency during laser light irradiation, it is desirable that black be used as the color of the enveloping layer, and white, red, blue or yellow, etc., be used as the color of the core component.

The present invention will now be described in detail by means of an application example. However, the present invention is not limited to this application example.

Application example

Polybutylene terephthalate resin (PBT; Valox (trademark), product of Nippon G.E. Plastics) was used as the thermoplastic resin constituting component A. The microcapsules used as component B were prepared in the following manner. Although any suitable pigment could have been used for the core component, in the present application example, 100 parts by weight of trimethylolpropane acrylate and 0.7 part by weight of perbutylpolyvinyl [transliteration] were mixed with 50 parts by weight of titanium dioxide ($TiO_2$). The mixture of these materials was charged into a dispersion to which small amounts of materials such as table salt and talc had been added, and the resulting system was agitated to bring about a reaction. Washing and drying were then carried out to obtain fine particles with a diameter of approximately 50 μm.

25 parts by weight carbon black, 80 parts by weight trimethylol [transliteration] and 0.7 part by weight perbutylpolyvinyl were mixed with 50 parts by weight of the fine particles for use in the core obtained in the above manner, the resulting mixture was charged into a dispersion the same as that used in the earlier preparation of the core component, and a reaction was brought about in the same manner as above.

As a result, microcapsules were obtained that had an average particle diameter of 70 μm and were com-

posed of a carbon black enveloping layer bonded to the surface of the core particles. Microcapsules B-a) obtained in this manner were added by the compounding shown in the table. Microcapsules B-b) consisting of carbon black (FW-18, product of Degussa Co.) were used as comparative examples.

The following flame retardants were used as component C.

C-a) brominated epoxy compound (SR-T5000, product of Sakamoto Yakuhin K.K.)

C-b) brominated BPA oligomer (FR-53, product of Mitsubishi Gas Chemical Co., Inc.)

C-c) $Sb_2O_3$

Glass fibers were used as the arbitrary component D.

The aforementioned components A, B, C and D were extruded at a set temperature of 260°C with a one-screw extruder to obtain extruded pellets. Using these pellets, 50 mm x 50 mm x 3 mm test pieces were injection molded under conditions of a 260°C cylinder temperature and an 80°C mold temperature.

Table I

| | | Composition (parts by weight) | | | | Results | |
|---|---|---|---|---|---|---|---|
| | | A) | B) | C) | D) | C O₂ | Y A G |
| Application Example | 1 | PBT | B-a) (5) | – | – | ◎ | ◎ |
| | 2 | " | " | C-a) (15)/C-c) (5) | – | ◎ | ◎ |
| | 3 | " | " | C-b) (15)/C-c) (5) | – | ◎ | ◎ |
| | 4 | " | " | – | (30) | ◎ | ◎ |
| | 5 | " | " | C-a) (15)/C-c) (5) | (30) | ◎ | ◎ |
| Comparative Example | 1 | " | B-b) (0. 5) | – | – | △ | ○ |
| | 2 | " | B-b) (5) | – | – | × | × |
| | 3 | " | B-b) (0. 5) | C-a) (15)/C-c) (5) | (30) | × | △ |

results    ◎ Extremely vivid    ○ Vivid    △ Somewhat indistinct    × Indistinct

The surfaces of the obtained test pieces were marked with a $CO_2$ laser and a YAG laser. The respective marking conditions were as follows.

| $CO_2$ laser: | Energy density at irradiated surface | 6-24 J/cm² |
|---|---|---|
| YAG laser: | speed of beam movement | 100-400 mm/sec |
| | bite [transliteration] size | 10-140 μm |

The vividness of the marking was evaluated under four stages by visual observation, with the results of this evaluation being shown in the right column in the above Table I. Also, it should be pointed out that, besides the aforementioned titanium oxide (white), it is also possible to use various inorganic pigments such as titanium yellow (yellow), carbon black (black), iron oxide (red oxide; red), and cobalt blue (blue) as the composition forming the core component in component B.

The selection of the aforementioned colors can be suitably made in accordance with the foreground color and the type of the thermoplastic resin constituting component A that forms the background color after molding.

The composition of the enveloping layer can be selected in accordance with items such as the processing temperature of the resin used in component A.

Merits of the invention

The resin composition of the present invention can be marked vividly and durably by irradiation with laser light. In the resin composition of the present invention, areas other than those irradiated are unaffected by the laser light. As a result, for example, a fine line 10 μm in width can be drawn. Furthermore, marking in arbitrary colors other than white and black, such as red and blue, can be carried out by taking the composition of the core component of the microcapsules into consideration.

Although the present invention includes resin compositions with various compositions, there is no need to investigate the optimal irradiation conditions one by one for each of the individual compositions. The resin composition of the present invention also has the advantage that it simplifies the manufacturing process.

## Claims

1. A resin composition for use in laser marking, in which B) 0.1-30 parts by weight of microcapsules composed of an enveloping layer made up of a composition that undergoes thermosensitive decomposition at a temperature of 200-1000°C and a core component with heat resistance different from that of said composition forming the enveloping layer is added with A) 100 parts by weight of thermoplastic resin.

2. The resin composition for use in laser marking described in Claim 1, in which the aforementioned enveloping layer and core component constituting the microcapsules are made from compositions having different colors.

European Patent Office

**EUROPEAN SEARCH REPORT**

Application Number

| | DOCUMENTS CONSIDERED TO BE RELEVANT | | EP 94306289.3 |
|---|---|---|---|

| Category | Citation of document with indication, where appropriate, of relevant passages | Relevant to claim | CLASSIFICATION OF THE APPLICATION (Int. Cl. 6) |
|---|---|---|---|
| X,P | DE - A - 4 402 363 (KUNSTSTOFF-MASCHINEN-HANDELSGESELLSCHAFT MBH) * Claims * | 1,2 | C 08 K 9/10 B 41 M 5/165 B 41 M 5/28 |
| X | EP - A - 0 542 133 (BASF AKTIENGESELLSCHAFT) * Claims; page 6, lines 36-53 * | 1,2 | |
| A | EP - A - 0 466 646 (CIBA-GEIGY AG) * Claims * | 1 | |
| D,A | EP - A - 0 036 680 (N.V. PHILIPS' GLOELLAMPEN-FABRIEKEN) * Claims * | 1 | |
| | | | **TECHNICAL FIELDS SEARCHED (Int. Cl. 6)** C 08 K B 41 M |

The present search report has been drawn up for all claims

| Place of search | Date of completion of the search | Examiner |
|---|---|---|
| VIENNA | 14-11-1994 | WEIGERSTORFER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)